(19) Europäisches Patentamt
European Patent Office
Office européen des brevets

(11) **EP 4 443 872 A1**

(12) **EUROPEAN PATENT APPLICATION**
published in accordance with Art. 153(4) EPC

(43) Date of publication:
**09.10.2024 Bulletin 2024/41**

(51) International Patent Classification (IPC):
**H04N 13/30** $^{(2018.01)}$

(21) Application number: **22900607.7**

(22) Date of filing: **01.12.2022**

(52) Cooperative Patent Classification (CPC):
**H04N 13/161; H04N 13/30; H04N 19/13; H04N 19/136**

(86) International application number:
**PCT/CN2022/135876**

(87) International publication number:
**WO 2023/098803 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.12.2021 CN 202111467925**

(71) Applicant: **Vivo Mobile Communication Co., Ltd. Dongguan, Guangdong 523863 (CN)**

(72) Inventors:
• **ZHANG, Wei**
  **Dongguan, Guangdong 523863 (CN)**
• **YANG, Fuzheng**
  **Dongguan, Guangdong 523863 (CN)**
• **LU, Jingyun**
  **Dongguan, Guangdong 523863 (CN)**
• **LV, Zhuoyi**
  **Dongguan, Guangdong 523863 (CN)**

(74) Representative: **Conti, Marco**
  **Bugnion S.p.A.**
  **Via di Corticella, 87**
  **40128 Bologna (IT)**

(54) **POINT CLOUD ENCODING PROCESSING METHOD, POINT CLOUD DECODING PROCESSING METHOD AND RELATED DEVICE**

(57)    Disclosed are a point cloud coding method, a point cloud decoding method and a related device, which belong to the technical field of computers. The point cloud coding method in an example of the present disclosure includes: determining a distribution characteristic value, where the distribution characteristic value is configured to denote distribution characteristic information (101) of to-be-coded attribute information; determining, based on the distribution characteristic value, a target order corresponding to the to-be-coded attribute information, where the target order is an order (102) of exponential-Golomb coding; and entropy-coding the to-be-coded attribute information based on an exponential-Golomb coding algorithm of the target order, and obtaining an attribute code stream (103).

```
                    ┌─────────┐
                    │  Start  │
                    └────┬────┘
                         │
    ┌────────────────────▼────────────────────┐
    │  Determine a distribution characteristic │── 101
    │              value                        │
    └────────────────────┬────────────────────┘
                         │
    ┌────────────────────▼────────────────────┐
    │  Determine, based on the distribution    │── 102
    │  characteristic value, a target order     │
    │  corresponding to to-be-coded attribute   │
    │  information                              │
    └────────────────────┬────────────────────┘
                         │
    ┌────────────────────▼────────────────────┐
    │  Entropy-code the to-be-coded attribute   │── 103
    │  information based on an exponential-      │
    │  Golomb coding algorithm of the target    │
    │  order, and obtain an attribute code      │
    │  stream                                   │
    └────────────────────┬────────────────────┘
                         │
                    ┌────▼────┐
                    │   End   │
                    └─────────┘
```

FIG. 3

EP 4 443 872 A1

Processed by Luminess, 75001 PARIS (FR)

**Description**

**CROSS-REFERENCE TO RELATED APPLICATIONS**

The present disclosure claims the benefit of priority to Chinese Patent Application No. 202111467925.3, filled on December 3, 2021, which is incorporated herein in its entirety by reference.

**TECHNICAL FIELD**

The present disclosure belongs to the technical field of computers, and particularly relates to a point cloud coding method, a point cloud decoding method and a related device.

**BACKGROUND**

A point cloud, a representation of a three-dimensional object or scene, is composed of a set of discrete points, which are randomly distributed in the space to express a spatial structure and a surface attribute of the three-dimensional object or scene. To accurately reflect information in the space, a considerable amount of discrete points are required. Further, to reduce a bandwidth occupied when point cloud data is stored and transmitted, the point cloud data will be coded and compressed. The point cloud data is generally composed of geometric information describing a position, such as three-dimensional coordinates (x, y, z), and attribute information of the position, such as a colour (R, G, B), reflectance, etc. The geometric information and the attribute information are coded separately in a point cloud coding and compressing process.

At present, when the attribute information of the point cloud is coded, removal of redundancy between information is far from satisfactory, causing low coding efficiency.

**SUMMARY**

Examples of the present disclosure provide a point cloud coding method, a point cloud decoding method and a related device, which can solve the problem of low coding efficiency.

According to a first aspect, a point cloud coding method is provided. The method includes:

determining a distribution characteristic value, where the distribution characteristic value is configured to denote distribution characteristic information of to-be-coded attribute information;

determining, based on the distribution characteristic value, a target order corresponding to the to-be-coded attribute information, where the target order is an order of exponential-Golomb coding; and

entropy-coding the to-be-coded attribute information based on an exponential-Golomb coding algorithm of the target order, and obtaining an attribute code stream.

According to a second aspect, a point cloud decoding method is provided. The method includes:

determining a target order corresponding to a to-be-decoded attribute code stream, where the target order is an order of exponential-Golomb decoding; and

entropy-decoding the to-be-decoded attribute code stream based on an exponential-Golomb decoding algorithm of the target order.

According to a third aspect, a point cloud coding apparatus is provided. The apparatus includes:

a first determination module, which is configured to determine a distribution characteristic value, where the distribution characteristic value is configured to denote distribution characteristic information of to-be-coded attribute information;

a second determination module, which is configured to determine, based on the distribution characteristic value, a target order corresponding to the to-be-coded attribute information, where the target order is an order of exponential-Golomb coding; and

a coding module, which is configured to entropy-code the to-be-coded attribute information based on an exponential-Golomb coding algorithm of the target order, and obtain an attribute code stream.

According to a fourth aspect, a point cloud decoding apparatus is provided. The apparatus includes:

a determination module, which is configured to determine a target order corresponding to a to-be-decoded attribute code stream, where the target order is an order of exponential-Golomb decoding; and

a decoding module, which is configured to entropy-decode the to-be-decoded attribute code stream based on an exponential-Golomb decoding algorithm of the target order.

According to a fifth aspect, an example of the present disclosure provides an electronic device. The electronic device includes a processor and a memory. The memory stores a program or instruction capable of running on the processor. The program or instruction implements steps of the method as described in the first aspect when executed by the processor; or the program or instruction implements steps of the method as described in the second aspect when executed by the processor.

According to a sixth aspect, an example of the present disclosure provides a readable storage medium. The readable storage medium stores a program or instruction. The program or instruction implements steps of the method as described in the first aspect when executed by a processor; or the program or instruction implements steps of the method as described in the second aspect when executed by the processor.

According to a seventh aspect, an example of the present disclosure provides a chip. The chip includes a processor and a communication interface. The communication interface is coupled to the processor. The processor is configured to run a program or instruction to implement steps of the method as described in the first aspect or the second aspect.

According to an eighth aspect, an example of the present disclosure provides a computer program product. The program product is stored in a storage medium. The program product is executed by at least one processor to implement steps of the method as described in the first aspect or the second aspect.

According to a ninth aspect, an example of the present disclosure provides a communications device. The communications device is configured to execute the method as described in the first aspect or the second aspect.

In an example of the present disclosure, a distribution characteristic value is determined. The distribution characteristic value is configured to denote distribution characteristic information of to-be-coded attribute information. Based on the distribution characteristic value, a target order corresponding to the to-be-coded attribute information is determined. The target order is an order of exponential-Golomb coding. The to-be-coded attribute information is entropy-coded based on an exponential-Golomb coding algorithm of the target order, and an attribute code stream is obtained. In this way, when attribute information of a point cloud is coded, a target order can be adaptively determined based on distribution characteristic information of to-be-coded attribute information. The to-be-coded attribute information is entropy-coded by using an exponential-Golomb coding algorithm of the target order such that an effect of removing redundancy between information can be improved, and coding efficiency can be increased.

**BRIEF DESCRIPTION OF THE DRAWINGS**

FIG. 1 is a first schematic diagram of a point cloud audio video coding standard (AVS) coder framework;
FIG. 2 is a second schematic diagram of a point cloud AVS coder framework;
FIG. 3 is a flow diagram of a point cloud coding method according to an example of the present disclosure;
FIG. 4 is a flow diagram of a point cloud decoding method according to an example of the present disclosure;
FIG. 5 is a structural diagram of a point cloud coding apparatus according to an example of the present disclosure;
FIG. 6 is a structural diagram of a point cloud decoding apparatus according to an example of the present disclosure;
FIG. 7 is a first structural diagram of an electronic device according to an example of the present disclosure; and
FIG. 8 is a second structural diagram of an electronic device according to an example of the present disclosure.

**DETAILED DESCRIPTION**

Technical solutions in examples of the present disclosure will be clearly described below in combination with accompanying drawings in the examples of the disclosure. Apparently, the described examples are merely some examples rather than all examples of the present disclosure. All other examples obtained by those skilled in the art based on the example of the present disclosure fall within the scope of protection of the present disclosure.

The terms "first" and "second" in the description and claims of the present disclosure are used for distinguishing between similar objects, but are not used for describing a specific sequence or order. It should be understood that terms used this way can be interchanged under appropriate circumstances such that an example of the present disclosure can be implemented in an order other than those illustrated or described herein. Moreover, the objects distinguished by "first" and "second" generally belong to one type. The number of objects is not limited. For instance, one or more first objects are possible. In addition, "and/or" in the description and claims indicates at least one of the connected objects, and the character "j" generally indicates that the associated objects are in an "or" relationship.

Coding and decoding ends corresponding to coding and decoding methods in examples of the present disclosure can be terminals. The terminal can also be referred to as a terminal device or user equipment (User Equipment, UE). The terminal can be a mobile phone, a tablet personal computer (Tablet Personal Computer), a laptop computer (Laptop Computer) which is also referred to as a notebook computer, a personal digital assistant (Personal Digital Assistant, PDA), a palm computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device) or a vehicle user equipment (Vehicle User Equipment, VUE), a pedestrian user equipment (Pedestrian User Equipment, PUE), and other terminal side devices. The wearable device includes: a smart watch, bracelet, earphone, glasses, etc. It should be noted that the specific type of the terminal is not limited in examples of the present disclosure.

For convenience of understanding, some contents involved in examples of the present disclosure are described below.

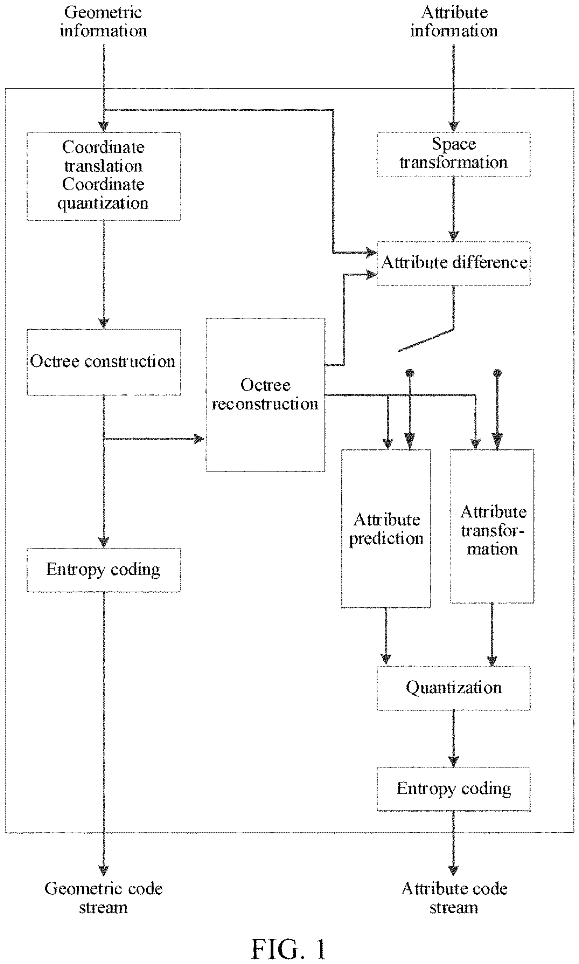

As shown in FIG. 1, in a point cloud audio video coding standard (Audio Video coding Standard, AVS) coder framework, geometric information and attribute information of a point cloud are coded separately. First, coordinate transformation is carried out on the geometric information, such that the point cloud is entirely contained in a bounding box (bounding box). Then, coordinate quantization is carried out. The quantization mainly plays a role of scaling. Since quantization rounds off geometric coordinates, some points have the same geometric information and are referred to as duplicate points. Whether to remove duplicate points is decided according to parameters. Quantization and removal of duplicate points are also referred to as a voxelization process. Then, multiway tree partition is carried out on the bounding box, such as an octree, quadtree or binary tree partition. In a geometric information coding framework based on a multiway tree, the bounding box is equally divided into 8 subcubes. Non-empty subcubes continue to be divided until a unit cube having leaf nodes of 1x1x1 is obtained. A number of the leaf nodes is coded, and a binary code stream is generated.

After geometry coding, the geometric information is reconstructed for later re-coloring. Attribute coding is mainly aimed at colour and reflectance information. First, whether to convert a colour space is determined according to parameters. If yes, colour information is converted from a red-green-blue (Red Green Blue, RGB) colour space to a luminance-chrominance-chroma (YUV) colour space. Then, a geometrically reconstructed point cloud is re-colored by an original point cloud, such that uncoded attribute information corresponds to reconstructed geometric information. In colour information coding, after a point cloud is sorted by using a Morton code, a nearest neighbor of a point for prediction is searched by using a geometric spatial relationship. Prediction is carried out on the point for prediction by using a reconstructed attribute value of the found neighbor and a predicted attribute value is obtained. Difference is carried out on a real attribute value and the predicted attribute value, such that a predicted residual is obtained. Finally, the predicted residual is quantized and coded, and a binary code stream is generated.

Attribute information coding is divided into three branches: attribute prediction, attribute prediction transformation and attribute transformation.

(1) An attribute prediction process is as follows: A point cloud is reordered first, and difference prediction is carried out. The point cloud is reordered by using a Hilbert (Hilbert) code in a current AVS coding framework. Attribute prediction is carried out on the resorted point cloud. If geometric information of a current to-be-coded point is the same as that of a previous coded point, that is, a duplicate point exists, a reconstructed attribute value of the duplicate point is used as a predicted attribute value of the current to-be-coded point. Otherwise, first m points in a Hilbert sort are selected as neighbor candidate points for the current to-be-coded point. Manhattan distances between the neighbor candidate points and the geometric information of the current to-be-coded point are computed. n points having shortest distances are determined as neighbors of the current to-be-coded point. A reciprocal of the distance is used as a weight. A weighted average of attributes of all the neighbors is computed as the predicted attribute value of the current to-be-coded point. A predicted residual is computed by using a predicted attribute value and an attribute value of a current to-be-coded point. Finally, the predicted residual is quantized and entropy-coded, and a binary code stream is generated.

(2) An attribute prediction transformation process is as follows: A point cloud sequence is grouped according to spatial density of a point cloud, and attribute information of the point cloud is predicted. The obtained predicted residual is transformed, and an obtained transformation coefficient is quantized. The quantized transformation coefficient and the predicted residual are entropy-coded, and a binary code stream is generated.

(3) An attribute transformation process is as follows: Wavelet transform is carried out on a point cloud attribute, and a transformation coefficient is quantized. A reconstructed attribute value is obtained through inverse quantization and inverse wavelet transform. A difference between an original attribute and the reconstructed attribute value is computed, and a predicted residual is obtained and quantized. The quantized transformation coefficient and the predicted residual are entropy-coded, and a binary code stream is generated.

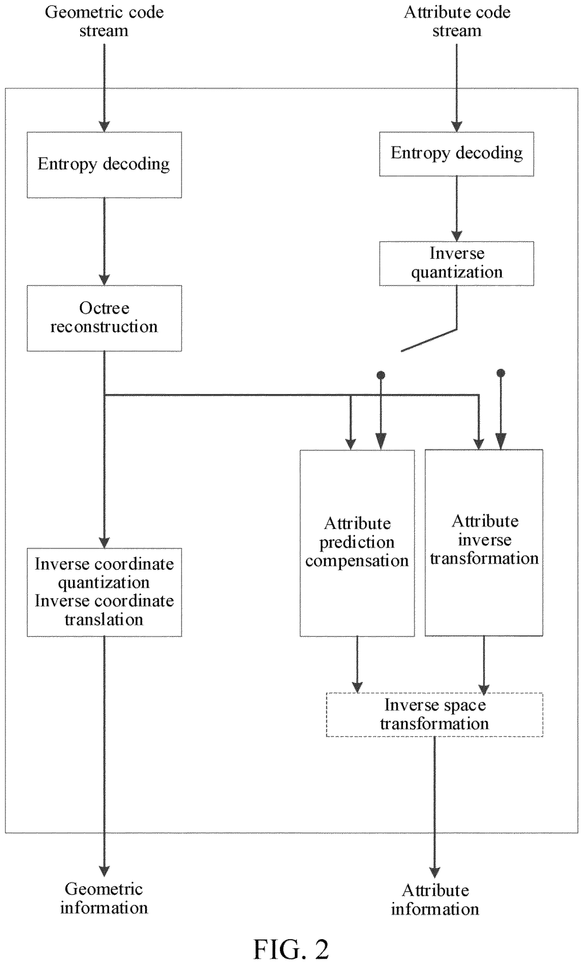

Optionally, an AVS decoding flow corresponds to a coding flow. Specifically, an AVS decoder framework is shown in FIG.2.

Optionally, the point cloud coding method in an example of the present disclosure relates to an attribute information coding part in an AVS coder framework, and the point cloud decoding method relates to an attribute information decoding part in the AVS decoder framework.

Optionally, the point cloud coding method in an example of the present disclosure relates to entropy coding in the attribute information coding part, and the point cloud decoding method relates to entropy decoding in the attribute information decoding part.

The point cloud coding method and the point cloud decoding method in examples of the present disclosure will be described in detail below in combination with accompanying drawings through some examples and their application scenarios.

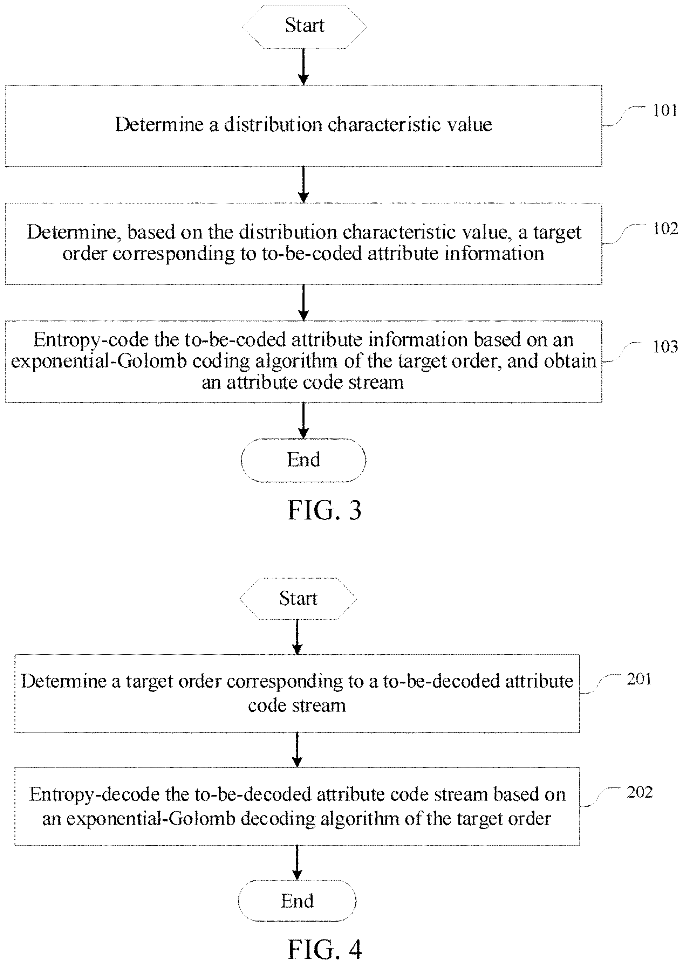

With reference to FIG. 3, a flow diagram of a point cloud coding method according to an example of the present disclosure is shown in FIG.3. As shown in FIG.3, the point cloud coding method includes steps as follows:

Step 101: determine a distribution characteristic value. The distribution characteristic value is configured to denote distribution characteristic information of to-be-coded attribute information.

The point cloud coding method can be used at a coding end. The distribution characteristic information of the to-be-coded attribute information can represent attribute distribution of a point cloud. The to-be-coded attribute information may be attribute information of a point cloud sequence, attribute information of a subset of the point cloud sequence, or attribute information of a subset of a subset of the point cloud sequence, etc., which is not limited in the example. A subset of the point cloud sequence may be a slice (slice) of the point cloud sequence. For example, when the to-be-coded attribute information is attribute information of a point cloud sequence, for instance, the to-be-coded attribute information may be attribute information of a current point cloud sequence.

In addition, the distribution characteristic value may be related to a maximum of the to-be-coded attribute information, the distribution characteristic value may be related to a minimum of the to-be-coded attribute information, the distribution characteristic value may be related to a difference between the maximum and the minimum of the to-be-coded attribute information, or the distribution characteristic value may be related to an average of absolute values of the to-be-coded attribute information, etc., which is not limited in the example.

When the to-be-coded attribute information is attribute information of a current point cloud sequence, for instance, the current point cloud sequence may be traversed, a maximum and a minimum of the attribute information in the current point cloud sequence are recorded, and a distribution range of the attribute information of the current point cloud sequence may be represented according to the maximum and the minimum of the attribute information. For example, the distribution characteristic value may be a difference between the maximum and the minimum of the attribute information in the current point cloud sequence. Alternatively, the current point cloud sequence may be traversed, an average of the attribute information in the current point cloud sequence is computed, and the distribution characteristic value may be an average of absolute values of the attribute information in the current point cloud sequence.

In an embodiment, distribution characteristic value disAttr may be difference $Attr_{min}$ between maximum $Attr_{max}$ of attribute information in the current point cloud sequence and a minimum of the attribute information in the current point cloud sequence:

$$\mathrm{disAttr} = \mathrm{Attr}_{\max} - \mathrm{Attr}_{\min}.$$

In addition, the distribution characteristic value may be determined based on the to-be-coded attribute information, or may be determined based on target information corresponding to the to-be-coded attribute information. The target information includes at least one of a predicted residual and a transformation coefficient. When the distribution characteristic value is determined based on the target information corresponding to the to-be-coded attribute information, for instance, the distribution characteristic value may be a difference between a maximum and a minimum of the target information corresponding to the to-be-coded attribute information, or the distribution characteristic value may be an average of absolute values of the target information corresponding to the to-be-coded attribute information.

It should be noted that the to-be-coded attribute information may be colour attribute information, reflectance attribute information, or other types of attribute information. An attribute type of the to-be-coded attribute information is not limited in an example of the present disclosure.

Step 102: determine a target order corresponding to the to-be-coded attribute information based on the distribution characteristic value. The target order is an order of exponential-Golomb coding.

The target order may be positively correlated with the distribution characteristic value. In an embodiment, the target order corresponding to the to-be-coded attribute information may be determined based on a ratio of the distribution characteristic value to an attribute quantization step. The target order corresponding to the to-be-coded attribute information may be positively correlated with the ratio of the distribution characteristic value to the attribute quantization step.

The greater the ratio of the distribution characteristic value to the attribute quantization step, the greater the target order corresponding to the to-be-coded attribute information. Ratio disAttr' of the distribution characteristic value to the attribute quantization step is:

$$disAttr' = \frac{disAttr}{AttrQuantStep};$$

disAttr is the distribution characteristic value, and AttrQuantStep is the attribute quantization step. The ratio of the distribution characteristic value to the attribute quantization step can represent distribution characteristic information of the to-be-coded attribute information at a current code rate point.

In an embodiment, a target index value may be computed according to a ratio of the distribution characteristic value to the attribute quantization step, an exponential-Golomb coding order corresponding to the target index value is searched for in a stored lookup table according to the target index value. The exponential-Golomb coding order corresponding to the target index value is determined as the target order. The lookup table is a lookup table preset according to coding attributes of the exponential-Golomb coding. A corresponding relationship between an index value and an exponential-Golomb coding order is stored in the lookup table.

In addition, index value Index may be positively correlated with ratio disAttr' of the distribution characteristic value to the attribute quantization step.

In an embodiment, target index value Index may be:

$$Index = \log_2 disAttr'.$$

Step 103: entropy-code to-be-coded attribute information based on an exponential-Golomb coding algorithm of the target order, and obtain an attribute code stream.

Target information corresponding to the to-be-coded attribute information may be obtained. The target information includes at least one of a predicted residual and a transformation coefficient. The target information is entropy-coded by using an exponential-Golomb coding algorithm of the target order. For example, attribute prediction may be carried out on the to-be-coded attribute information, a predicted residual is obtained, and the predicted residual is entropy-coded by using an exponential-Golomb coding algorithm of the target order.

It should be noted that in a process of entropy-coding an attribute by using an AVS-point cloud compression (Point Cloud Compression, PCC) algorithm, a predicted residual is required to be entropy-coded through K-order exponential-Golomb coding. In the related art, in cases of different attribute types, different K values are directly allocated to carry out entropy coding. For instance, in a case that attribute information is a colour, a predicted residual is entropy-coded by using 1st order exponential-Golomb coding. In a case that attribute information is reflectance, a predicted residual is entropy-coded by using 3rd order exponential-Golomb coding. However, due to different point cloud sequences at different code rate points, a distribution range of an attribute residual is also different. According to an example of the present disclosure, a target order corresponding to to-be-coded attribute information is determined based on distribution characteristic information of the to-be-coded attribute information. An adaptive exponential-Golomb coding method is provided. Compared with the method of using the same K-order exponential-Golomb coding at all code rate points for the same attribute type, an example of the present disclosure can efficiently remove redundancy between information. Moreover, attribute information distribution conditions of different attribute types at different code rate points can be fully used, and coding efficiency can be further increased.

In an example of the present disclosure, a distribution characteristic value is determined. The distribution characteristic value is configured to denote distribution characteristic information of to-be-coded attribute information. Based on the distribution characteristic value, a target order corresponding to the to-be-coded attribute information is determined. The target order is an order of exponential-Golomb coding. The to-be-coded attribute information is entropy-coded based on an exponential-Golomb coding algorithm of the target order, and an attribute code stream is obtained. In this way, when attribute information of a point cloud is coded, a target order can be adaptively determined based on distribution characteristic information of to-be-coded attribute information. The to-be-coded attribute information is entropy-coded by using an exponential-Golomb coding algorithm of the target order such that an effect of removing redundancy between information can be improved, and coding efficiency can be increased.

Optionally, the attribute code stream carries indication information of the target order.

The indication information may be used configured to indicate the target order. When the target order is K, for instance, indication information of a target order may be K, K order or Degree K, etc. A specific expression form of indication information of a target order is not limited in the example.

It should be noted that a target order indicated by indication information carried in the attribute code stream is an order of exponential-Golomb decoding when configured for decoding.

In the embodiment, the attribute code stream carries indication information of the target order such that a decoding end can obtain a target order by using the indication information of the target order carried in the attribute code stream. Entropy decoding is carried out by using an exponential-Golomb decoding algorithm of the target order.

Optionally, the attribute code stream carries an attribute information parameter set, the attribute information parameter set includes the indication information and an attribute type corresponding to the indication information, and the attribute type is a type of the to-be-coded attribute information.

The coding end may write the indication information of the target order into an attribute information parameter set adaptation parameter set (Adaptation Parameter Set, APS).

In an embodiment, parameter GolombNumber[num_attr_type] is introduced into the attribute information parameter set APS to store an order of exponential-Golomb coding selected for different types of attributes. Specifically, num_attr_type is a total number of attribute types of a to-be-coded point cloud, a value of GolombNumber [attrIdx] indicates an order of exponential-Golomb coding of an (attrIdx)th attribute, attrIdx = 0, 1,..., num_attr_type -1. A value of GolombNumber [attrIdx] is an integer greater than or equal to 0, and attrIdx is configured to identify different attribute types. For instance, a current AVS point cloud dataset mainly includes two types of attributes: colour and reflectance. A corresponding relationship between attrIdx and an attribute type in an example of the present disclosure may be as shown in Table 1.

Table 1 Corresponding relationship between attrIdx and attribute type

| attrIdx | Attribute type |
| --- | --- |
| 0 | Colour |
| 1 | Reflectance |

It should be noted that the decoding end may obtain exponential-Golomb order K, that is, the target order from the to-be-decoded attribute code stream through parsing. Then, the to-be-decoded attribute code stream is decoded according to order K. In an embodiment, the decoding end obtains a value of a syntax element GolombNumber [attrIdx] from an input code stream, and obtains exponential-Golomb order K corresponding to an attribute type according to the value of GolombNumber [attrIdx]. The exponential-Golomb order is an exponential-Golomb coding order.

In a case of a colour attribute (that is, in a case that attrIdx is 0), exponential-Golomb order K is equal to a value of kth_GolombNumber [0]. When attribute information is decoded, an attribute code stream corresponding to colour information is decoded by using a K-order exponential-Golomb decoding algorithm.

In a case of a reflectance attribute (that is, in a case that attrIdx is 1), exponential-Golomb order K is equal to a value of kth_GolombNumber [1]. When attribute information is decoded, an attribute code stream corresponding to reflectance is decoded by using a K-order exponential-Golomb decoding algorithm.

In the embodiment, the attribute code stream carries an attribute information parameter set, and the attribute information parameter set includes indication information and an attribute type corresponding to the indication information. Therefore, the decoding end can obtain a corresponding relationship between a target order and the attribute type by using the attribute information parameter set, and the target order can be determined according to an attribute type of the to-be-decoded attribute information. Entropy decoding is carried out by using an exponential-Golomb decoding algorithm of the target order.

Optionally, the target order is positively correlated with the distribution characteristic value.

When the distribution characteristic value is a difference between a maximum of the to-be-coded attribute information and a minimum of the to-be-coded attribute information, for instance, the greater the distribution characteristic value, the greater a distribution range of the to-be-coded attribute information. The target order is positively correlated with the distribution characteristic value, such that a greater exponential-Golomb coding order is configured for the to-be-coded attribute information having a larger distribution range. Therefore, redundancy between information can be efficiently removed, and coding efficiency can be improved.

In an embodiment, the target order is directly proportional to the distribution characteristic value.

Optionally, the step of determining, based on the distribution characteristic value, a target order corresponding to the to-be-coded attribute information includes:

determine, based on a rounded value of a ratio of the distribution characteristic value to an attribute quantization step, the target order corresponding to the to-be-coded attribute information.

The attribute quantization step may be a current attribute quantization step, that is, an attribute quantization step of current coding. A target order corresponding to the to-be-coded attribute information may be positively correlated with a rounded value of a ratio of the distribution characteristic value to the attribute quantization step. For example, a target order corresponding to the to-be-coded attribute information may be directly proportional to the rounded value of the ratio of the distribution characteristic value to the attribute quantization step.

In an embodiment, a corresponding relationship between an index value and an exponential-Golomb coding order may be stored in a lookup table. A rounded value of the ratio of the distribution characteristic value to the attribute quantization step is used as a target index value. An exponential-Golomb coding order corresponding to the target index value is searched for in the lookup table and used as a target order.

In the embodiment, the target order corresponding to the to-be-coded attribute information is determined based on the rounded value of the ratio of the distribution characteristic value to the attribute quantization step. An order of exponential-Golomb coding is adaptively selected according to distribution of attribute information of different attribute types at different code rate points in an attribute entropy coding process. Entropy coding is carried out by using a more matching K-order exponential-Golomb algorithm such that redundancy between information can be more effectively reduced, and coding efficiency can be further increased.

Optionally, the step of determining, based on a rounded value of a ratio of the distribution characteristic value to an attribute quantization step, the target order corresponding to the to-be-coded attribute information includes:

determine a target index value based on the rounded value of the ratio of the distribution characteristic value to the attribute quantization step; and

determine, based on a stored corresponding relationship between an exponential-Golomb coding order and an index value, the target order corresponding to the to-be-coded attribute information. The target order corresponds to the target index value.

The exponential-Golomb coding order is an order of exponential-Golomb coding. The corresponding relationship between the exponential-Golomb coding order and the index value may be stored in a lookup table, such that the exponential-Golomb coding order corresponding to the target index value may be searched for in the stored lookup table. The exponential-Golomb coding order corresponding to the target index value is determined as the target order. The lookup table may be a lookup table preset according to coding attributes of exponential-Golomb coding.

In addition, the target index value may be positively correlated with the rounded value of the ratio of the distribution characteristic value to the attribute quantization step.

In an embodiment, the target index value may be $\log_2$ [disAttr'] . [] is a rounding symbol, and [disAttr'] is a rounded value of a ratio of the distribution characteristic value to the attribute quantization step.

In an embodiment, the target index value may be $[\log_2[disAttr']]$.

In the embodiment, a target index value is determined based on the rounded value of the ratio of the distribution characteristic value to the attribute quantization step. determine, based on a stored corresponding relationship between an exponential-Golomb coding order and an index value, the target order corresponding to the to-be-coded attribute information. The target order corresponds to the target index value. In this way, the target order can be rapidly determined based on the stored corresponding relationship between the exponential-Golomb coding order and the index value, and coding efficiency can be further increased.

Optionally, the step of entropy-coding the to-be-coded attribute information based on an exponential-Golomb coding algorithm of the target order includes:

acquire target information corresponding to the to-be-coded attribute information, where the target information includes at least one of a predicted residual and a transformation coefficient; and

entropy-code the target information by using the exponential-Golomb coding algorithm of the target order.

Attribute prediction may be carried out on the to-be-coded attribute information, a predicted residual is obtained, and the predicted residual is entropy-coded by using an exponential-Golomb coding algorithm of the target order; attribute prediction transformation may be carried out on the to-be-coded attribute information, a predicted residual and a transformation coefficient are obtained, and the predicted residual and the transformation coefficient are entropy-coded by using an exponential-Golomb coding algorithm of the target order; or attribute transformation may be carried out on the to-be-coded attribute information, a predicted residual and a transformation coefficient are obtained, and entropy coding may be carried out on the predicted residual and the transformation coefficient by using an exponential-Golomb coding algorithm of the target order, etc., which is not limited in the example.

In the embodiment, target information corresponding to the to-be-coded attribute information is acquired. The target information includes at least one of a predicted residual and a transformation coefficient. The target information is entropy-coded by using the exponential-Golomb coding algorithm of the target order. In this way, when entropy coding is carried out on the predicted residual or the transformation coefficient, the effect of removing redundancy between information can be improved, and coding efficiency can be increased.

Optionally, the distribution characteristic value is determined based on at least one of:

a maximum of the to-be-coded attribute information;

a minimum of the to-be-coded attribute information;

a difference between the maximum and the minimum of the to-be-coded attribute information; and

an average of absolute values of the to-be-coded attribute information.

In the embodiment, any one of the maximum of the to-be-coded attribute information, the minimum of the to-be-coded attribute information, the difference between the maximum and the minimum of the to-be-coded attribute information, and the average of the absolute values of the to-be-coded attribute information can better reflect distribution of the to-be-coded attribute information such that the target order can be adaptively determined according to distribution of the to-be-coded attribute information. The to-be-coded attribute information is entropy-coded by using an exponential-Golomb coding algorithm of the target order such that an effect of removing redundancy between information can be improved, and coding efficiency can be increased.

As shown in Tables 2 to 5, under various test conditions, a point cloud is coded through the point cloud coding method in an example of the present disclosures. Compared with PCRMV5.0, compression efficiency is higher, and coding performance can be improved. AVSC1_ai in Table 2 represents testing in a geometrically-lossy and attribute-lossy coding mode. AVSC2_ai in Table 3 represents testing in a geometrically-lossless and attribute-lossy coding mode. AVSC3_ai in Table 4 represents testing in a geometrically-lossless, attribute-limited and lossy coding mode. AVSC4_ai in Table 5 represents testing in a geometrically-lossless and attribute-lossless coding mode. Moreover, average represents an average performance gain of all test sequences under the condition. Overall average represents an average performance gain of all test sequences. AVSCat1A is a test sequence in a case that attribute information is reflectance information. AVSCat1B is a test sequence in a case that attribute information is colour information. AVSCat1C is a test sequence in a case that attribute information includes reflectance information and colour information. AVSCat2 is a test sequence which is a multi-frame sequence in a case that attribute information is reflectance information. AVSCat3 is a test sequence which is a multi-frame sequence in a case that attribute information is colour information. AVSCat1A + AVSCat2 average is an average performance gain of the two test sequences. In Tables 2 to 4, luma (Luma), chroma (Chroma) Cb and Chroma Cr represent three channels, and Reflection represents reflectance. In Table 5, Total represents a change of a total code stream, Colour represents a colour, Geometry represents geometric information. Moreover, "-" in Tables 2-5 indicates no data.

It should be noted that BD-AttrReate is a parameter for determining whether an attribute information coding performance is desirable. In a case that BD-AttrReate is negative, it indicates that the performance is better. On this basis, the greater an absolute value of BD-AttrReate, the greater a performance gain. A number of bits per input point (bits per input point, Bpip) is an average number of bits per input point after compression. The less the number of bits, the higher compression efficiency. Moreover, bpip ratio is a ratio of bpip of a test method to that of a reference method and expressed as a percentage. Under the lossless condition, if a bpip ratio is less than 100%, it indicates that the performance of the test method is better. It can be seen from data in Tables 2-5 that the coding performance of the point cloud coding method according to an example of the present disclosure is better than that of the reference method in attribute information.

Table 2 Test results under the condition of AVSC1_ai

| AVSC1_ai | BD-AttrRate [%] | | | |
|---|---|---|---|---|
| | Luma | Chroma Cb | Chroma Cr | Reflectance |
| AVSCat1A average | - | - | - | -2.1% |
| AVSCat1B average | 0.0% | 0.0% | 0.0% | - |
| AVSCat1C average | 0.0% | 0.0% | 0.0% | -0.1% |
| AVSCat2-frame average | - | - | - | -0.6% |
| AVSCat3 average | 0.0% | 0.0% | 0.0% | - |
| AVSCat1A+AVSCat2 average | - | - | - | -1.5% |
| Overall average | 0.0% | 0.0% | 0.0% | -1.1% |

Table 3 Test results under the condition of AVSC2_ai

| AVSC2_ai | BD-AttrRate [%] | | | |
|---|---|---|---|---|
| | Luma | Chroma Cb | Chroma Cr | Reflectance |
| AVSCat1A average | - | - | - | -1.2% |
| AVSCat1B average | -0.1% | -0.1% | -0.1% | - |
| AVSCat1C average | 0.0% | 0.0% | 0.0% | -0.1% |
| AVSCat2-frame average | - | - | - | -0.8% |
| AVSCat3 average | 0.0% | 0.0% | 0.0% | - |
| AVSCat1A+AVSCat2 average | - | - | - | -1.0% |
| Overall average | 0.0% | 0.0% | 0.0% | -0.8% |

Table 4 Test results under the condition of AVSC3 _ai

| AVSC3_ai | BD-AttrRate [%] | | | |
|---|---|---|---|---|
| | Luma | Chroma Cb | Chroma Cr | Reflectance |
| AVSCat1A average | - | - | - | -1.7% |
| AVSCat1B average | -0.1% | -0.1% | -0.1% | - |
| AVSCat1C average | 0.0% | 0.0% | 0.0% | -0.1% |
| AVSCat2-frame average | - | - | - | -0.3% |
| AVSCat3 average | 0.0% | 0.0% | 0.0% | - |
| AVSCat1A+AVSCat2 average | - | - | - | -1.0% |
| Overall average | 0.0% | 0.0% | 0.0% | -0.8% |

Table 5 Test results under the condition of AVSC4_ai

| AVSC4_ai | bpip ratio [%] | | | |
|---|---|---|---|---|
| | Total | Geometry | Colour | Reflectance |
| AVSCat1A average | 97.3% | 100.0% | - | 93.3% |
| AVSCat1B average | 99.5% | 100.0% | 99.0% | - |
| AVSCat1C average | 98.8% | 100.0% | 98.8% | 98.3% |
| AVSCat2-frame average | 100.0% | 100.0% | - | 100.0% |
| AVSCat3 average | 100.2% | 100.0% | 100.2% | - |
| AVSCat1A+AVSCat2 average | 98.4% | 100.0% | - | 94.9% |
| Overall average | 98.9% | 100.0% | 99.2% | 95.8% |

With reference to FIG. 4, a flow diagram of a point cloud decoding method according to an example of the present disclosure is shown in FIG. 4. As shown in FIG. 4, the point cloud decoding method includes steps as follows:

Step 201: determine a target order corresponding to a to-be-decoded attribute code stream, where the target order is an order of exponential-Golomb decoding; and
Step 202: entropy-decode the to-be-decoded attribute code stream based on an exponential-Golomb decoding algorithm of the target order.

Optionally, the to-be-decoded attribute code stream carries indication information configured to indicate the target order.

Optionally, the to-be-decoded attribute code stream carries an attribute information parameter set, the attribute information parameter set includes the indication information and an attribute type corresponding to the indication information, and the attribute type is a type of attribute information corresponding to the to-be-decoded attribute code stream.

It should be noted that the example is an embodiment of a corresponding decoding side in the example shown in FIG. 3, and for its specific embodiment, reference can be made to related descriptions in the example shown in FIG. 3. To avoid repetition, detailed description is omitted in the example, and the same beneficial effects can be achieved.

An execution entity of the point cloud coding method provided in an example of the present disclosure may be a point cloud coding apparatus. In an example of the present disclosure, when a point cloud coding method is executed by a point cloud coding apparatus, for instance, the point cloud coding apparatus provided in the example of the present disclosure is described.

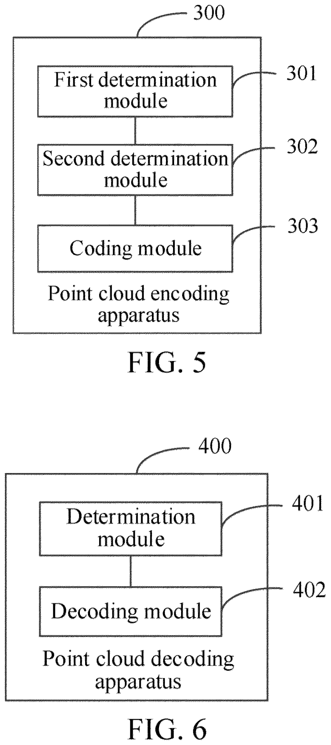

With reference to FIG. 5, a structural diagram of a point cloud coding apparatus according to an example of the present disclosure is shown in FIG. 5. As shown in FIG. 5, the point cloud coding apparatus 300 includes:

a first determination module 301, which is configured to determine a distribution characteristic value, where the distribution characteristic value is configured to denote distribution characteristic information of to-be-coded attribute information;

a second determination module 302, which is configured to determine, based on the distribution characteristic value, a target order corresponding to the to-be-coded attribute information, where the target order is an order of exponential-Golomb coding; and

a coding module 303, which is configured to entropy-code the to-be-coded attribute information based on an exponential-Golomb coding algorithm of the target order, and obtain an attribute code stream.

Optionally, the attribute code stream carries indication information of the target order.

Optionally, the attribute code stream carries an attribute information parameter set, the attribute information parameter set includes the indication information and an attribute type corresponding to the indication information, and the attribute type is a type of the to-be-coded attribute information.

Optionally, the target order is positively correlated with the distribution characteristic value.

Optionally, the second determination module 302 is specifically configured to:

determine, based on a rounded value of a ratio of the distribution characteristic value to an attribute quantization step, the target order corresponding to the to-be-coded attribute information.

Optionally, the second determination module 302 is specifically configured to:

determine a target index value based on the rounded value of the ratio of the distribution characteristic value to the attribute quantization step; and

determine, based on a stored corresponding relationship between an exponential-Golomb coding order and an index value, the target order corresponding to the to-be-coded attribute information. The target order corresponds to the target index value.

Optionally, the coding module 303 is specifically configured to:

acquire target information corresponding to the to-be-coded attribute information, where the target information includes at least one of a predicted residual and a transformation coefficient; and

entropy-code the target information by using the exponential-Golomb coding algorithm of the target order, and obtain an attribute code stream.

Optionally, the distribution characteristic value is determined based on at least one of:

a maximum of the to-be-coded attribute information;

a minimum of the to-be-coded attribute information;

a difference between the maximum and the minimum of the to-be-coded attribute information; and

an average of absolute values of the to-be-coded attribute information.

In an example of the present disclosure, the first determination module determines a distribution characteristic value. The distribution characteristic value is configured to denote distribution characteristic information of to-be-coded attribute information. The second determination module determines, based on the distribution characteristic value, a target order corresponding to the to-be-coded attribute information. The target order is an order of exponential-Golomb coding. The coding module entropy-codes the to-be-coded attribute information based on an exponential-Golomb coding algorithm of the target order, and obtains an attribute code stream. In this way, when attribute information of a point cloud is coded, a target order can be adaptively determined based on distribution characteristic information of to-be-coded attribute information. The to-be-coded attribute information is entropy-coded by using an exponential-Golomb coding algorithm of the target order such that an effect of removing redundancy between information can be improved, and coding efficiency can be increased.

The point cloud coding apparatus in an example of the present disclosure may be an electronic device, or a component in the electronic device, such as an integrated circuit or a chip. The electronic device may be a terminal or a different device other than the terminal. For example, the electronic device may be a mobile phone, a tablet computer, a notebook computer, a palm computer, an in-vehicle electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook or a personal digital assistant (personal digital assistant, PDA), etc., or may be a server, a network attached storage (Network Attached Storage, NAS), a personal computer (personal computer, PC), a television (television, TV), a teller machine or a self-service machine, etc., which is not specifically limited in an example of the present disclosure.

The point cloud coding apparatus in an example of the present disclosure may be an apparatus having an operating system. The operating system may be an Android (Android) operating system, an ios operating system, or another possible operating system, which is not specifically limited in an example of the present disclosure.

The point cloud coding apparatus provided in an example of the present disclosure can implement each process implemented by the method example in FIG. 3. To avoid repetition, detailed description is omitted herein.

An execution entity of the point cloud decoding method provided in an example of the present disclosure may be a point cloud decoding apparatus. In an example of the present disclosure, when a point cloud decoding method is executed by a point cloud decoding apparatus, for instance, the point cloud decoding apparatus provided in the example of the present disclosure is described.

With reference to FIG. 6, a structural diagram of a point cloud decoding apparatus according to an example of the present disclosure is shown in FIG. 6. As shown in FIG. 6, the point cloud decoding apparatus 400 includes:

a determination module 401, which is configured to determine a target order corresponding to a to-be-decoded attribute code stream, where the target order is an order of exponential-Golomb decoding; and

a decoding module 402, which is configured to entropy-decode the to-be-decoded attribute code stream based on an exponential-Golomb decoding algorithm of the target order.

Optionally, the to-be-decoded attribute code stream carries indication information configured to indicate the target order.

Optionally, the to-be-decoded attribute code stream carries an attribute information parameter set, the attribute information parameter set includes the indication information and an attribute type corresponding to the indication information, and the attribute type is a type of attribute information corresponding to the to-be-decoded attribute code stream.

The point cloud decoding apparatus in an example of the present disclosure may be an electronic device, or a component in the electronic device, such as an integrated circuit or a chip. The electronic device may be a terminal or a different device other than the terminal. For example, the electronic device may be a mobile phone, a tablet computer, a notebook computer, a palm computer, an in-vehicle electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook or a personal digital assistant (personal digital assistant, PDA), etc., or may be a server, a network attached storage (Network Attached Storage, NAS), a personal computer (personal computer, PC), a television (television, TV), a teller machine or a self-service machine, etc., which is not specifically limited in an example of the present disclosure.

The point cloud decoding apparatus in an example of the present disclosure may be an apparatus having an operating system. The operating system may be an Android (Android) operating system, an ios operating system, or another possible operating system, which is not specifically limited in an example of the present disclosure.

The point cloud decoding apparatus provided in an example of the present disclosure can implement each process implemented by the method example in FIG. 4. To avoid repetition, detailed description is omitted herein.

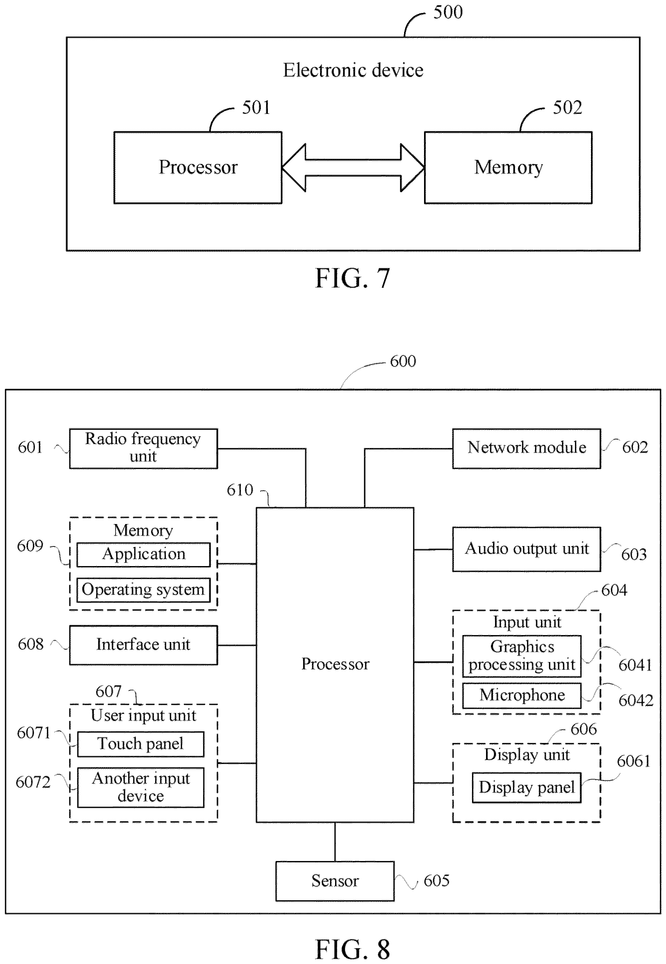

As shown in FIG.7, an example of the present disclosure further provides an electronic device 500. The electronic device includes a processor 501 and a memory 502. The memory 502 stores a program or instruction capable of running on the processor 501. The program or instruction implements each step of the above point cloud coding method example when executed by the processor 501, or the program or instruction implements each step of the above point cloud decoding method example when executed by the processor 501. The same technical effects can be achieved. To avoid repetition, detailed description is omitted herein.

It should be noted that the electronic device in an example of the present disclosure includes the above mobile electronic device and non-mobile electronic device.

FIG. 8 is a schematic diagram of a hardware structure of an electronic device for implementing an example of the present disclosure.

The electronic device 600 includes but is not limited to: components such as a radio frequency unit 601, a network module 602, an audio output unit 603, an input unit 604, a sensor 605, a display unit 606, a user input unit 607, an interface unit 608, a memory 609 and a processor 610.

Those skilled in the art can understand that the electronic device 600 may further include a power supply (such as a battery) for supplying power to the components. The power supply may be logically connected to the processor 610 by means of a power management system, such that functions, such as charging, discharging, and power consumption management are implemented by means of the power management system. The structure of the electronic device shown in FIG. 8 constitutes no limitation on the electronic device. The electronic device may include more or fewer components than those shown in the figures, some components may be combined, or a different component deployment may be used, which is not repeated herein.

In an embodiment, the electronic device is configured to execute a point cloud coding method.

The processor 610 is configured to determine a distribution characteristic value. The distribution characteristic value is configured to denote distribution characteristic information of to-be-coded attribute information.

The processor 610 is further configured to determine, based on the distribution characteristic value, a target order corresponding to the to-be-coded attribute information. The target order is an order of exponential-Golomb coding.

The processor 610 is further configured to entropy-code the to-be-coded attribute information based on an exponential-Golomb coding algorithm of the target order, and obtain an attribute code stream.

Optionally, the attribute code stream carries indication information of the target order.

Optionally, the attribute code stream carries an attribute information parameter set, the attribute information parameter set includes the indication information and an attribute type corresponding to the indication information, and the attribute type is a type of the to-be-coded attribute information.

Optionally, the target order is positively correlated with the distribution characteristic value.

Optionally, The processor 610 is further configured to:
determine, based on a rounded value of a ratio of the distribution characteristic value to an attribute quantization step, the target order corresponding to the to-be-coded attribute information.

Optionally, The processor 610 is further configured to:

determine a target index value based on the rounded value of the ratio of the distribution characteristic value to the attribute quantization step; and
determine, based on a stored corresponding relationship between an exponential-Golomb coding order and an index value, the target order corresponding to the to-be-coded attribute information. The target order corresponds to the target index value.

Optionally, The processor 610 is further configured to:
acquire target information corresponding to the to-be-coded attribute information, where the target information includes at least one of a predicted residual and a transformation coefficient; and

The target information is entropy-coded by using the exponential-Golomb coding algorithm of the target order.

Optionally, the distribution characteristic value is determined based on at least one of:

a maximum of the to-be-coded attribute information;
a minimum of the to-be-coded attribute information;
a difference between the maximum and the minimum of the to-be-coded attribute information; and
an average of absolute values of the to-be-coded attribute information.

In the embodiment, the processor 610 determines a distribution characteristic value. The distribution characteristic value is configured to denote distribution characteristic information of to-be-coded attribute information. The processor 610 determines, based on the distribution characteristic value, a target order corresponding to the to-be-coded attribute information. The target order is an order of exponential-Golomb coding. The processor 610 entropy-codes to-be-coded attribute information based on an exponential-Golomb coding algorithm of the target order, and obtains an attribute code stream. In this way, when attribute information of a point cloud is coded, a target order can be adaptively determined based on distribution characteristic information of to-be-coded attribute information. The to-be-coded attribute information is entropy-coded by using an exponential-Golomb coding algorithm of the target order such that an effect of removing redundancy between information can be improved, and coding efficiency can be increased.

In an embodiment, the electronic device is configured to execute a point cloud decoding method.

The processor 610 is configured to determine a target order corresponding to a to-be-decoded attribute code stream, where the target order is an order of exponential-Golomb decoding.

The processor 610 is further configured to entropy-decode the to-be-decoded attribute code stream based on an exponential-Golomb decoding algorithm of the target order.

Optionally, the to-be-decoded attribute code stream carries indication information configured to indicate the target order.

Optionally, the to-be-decoded attribute code stream carries an attribute information parameter set, the attribute information parameter set includes the indication information and an attribute type corresponding to the indication information, and the attribute type is a type of attribute information corresponding to the to-be-decoded attribute code stream.

The electronic device provided in the embodiment may implement each process implemented by the method example in FIG. 4.To avoid repetition, detailed description is omitted herein.

It should be understood that in an example of the present disclosure, an input unit 604 may include a graphics processing unit (Graphics Processing Unit, GPU) 6041 and a microphone 6042. The graphics processing unit 6041 processes image data of a static picture or a video that is obtained by an image acquisition apparatus (such as a camera) in a video capture mode or an image capture mode. A display unit 606 may include a display panel 6061, and the display panel 6061 may be configured by using a liquid crystal display, an organic light-emitting diode, etc. A user input unit 607 includes a touch panel 6071 and at least one another input device 6072. The touch panel 6071 is also referred to as a touchscreen. The touch panel 6071 may include two parts of a touch detection apparatus and a touch controller. The another input device 6072 may include but are not limited to a physical keyboard, a functional key (such as a volume control key or a switch key), a track ball, a mouse and a joystick. Detailed description is omitted herein.

The memory 609 may be configured to store software programs and various pieces of data. The memory 609 may mainly include a first storage area for storing a program or instruction and a second storage area for storing data. The first storage area may store an operating system, an application program or instruction required for at least one function (such as a sound playback function and an image playback function), etc. Moreover, the memory 609 may include a volatile memory or a nonvolatile memory, or the memory 609 may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in an example of the present disclosure includes but is not limited to these and any other suitable types of memories.

The processor 610 may include one or more processing units. Optionally, the processor 610 integrates an application processor and a modem processor. The application processor mainly processes operations related to an operating system, a user interface, an application program, etc. The modem processor mainly processes a wireless communication signal, such as a baseband processor. It can be understood that the above modem processor may be integrated into the processor 610 or not.

An example of the present disclosure further provides a readable storage medium. The readable storage medium may be nonvolatile or volatile, and stores a program or instruction. The program or instruction implements each process of the above point cloud coding method example when executed by the processor, or the program or instruction implements each process of the above point cloud decoding method example when executed by the processor. The same technical effects can be achieved. To avoid repetition, detailed description is omitted herein.

The processor is a processor in the electronic device in the above example. The readable storage medium includes a computer-readable storage medium, such as a computer read-only memory ROM, a random access memory RAM, a magnetic disk or an optical disk.

An example of the present disclosure further provides a chip. The chip includes a processor and a communication interface. The communication interface is coupled to the processor. The processor is configured to run a program or instruction, so as to implement each process of the above point cloud coding method example, or the processor is configured to run a program or instruction, so as to implement each processes of the above point cloud decoding method example. The same technical effects can be achieved. To avoid repetition, detailed description is omitted herein.

It should be understood that the chip mentioned in an example of the present disclosure may also be referred to as a system on a chip.

An example of the present disclosure provides a computer program product. The program product is stored in a storage medium. The program product is executed by at least one processor to implement each process of the above point cloud coding method example, or the program product is executed by at least one processor to implement each process of the above point cloud decoding method example. The same technical effects can be achieved. To avoid repetition, detailed description is omitted herein.

It should be noted that the terms "include", "comprise" or their any other variations herein are intended to cover non-exclusive inclusions, such that a process, method, article or apparatus including a series of elements not only includes those elements, include other elements that are not explicitly listed, or also include inherent elements of such process, method, article or apparatus. Under the circumstance of no more limitations, an element limited by phrases "comprising a..." and "including a..." does not exclude other same elements in a process, method, article or apparatus including the element. In addition, it should be noted that the scope of method and apparatus in embodiments of the present disclosure is not limited to execute functions in the order shown or discussed, but may also execute functions substantially simultaneously or in the reverse order of the functions involved. For instance, the described method may be executed in an order different from an order that is described, and various steps may be added, omitted or combined. In addition, features described with reference to some instances may also be combined in other instances.

Through the descriptions in the above embodiments, those skilled in the art would clearly know that the methods according to the above examples may be achieved by means of software plus a necessary general-purpose hardware platform, and certainly may also be achieved by means of hardware, but in many situations the former is a better implementation. Based on such understanding, the technical solution of the present disclosure may be embodied in a form of a software product in essence or a part contributing to the prior art. The computer software product is stored in a storage medium (such as a ROM/RAM, a magnetic disk and an optical disk), and includes several instructions for enabling a terminal device (which may be a mobile phone, a computer, a server or a network device, etc.) to execute the methods in all the examples of the present disclosure.

The examples of the present disclosure are described above in combination with accompanying drawings. However, the present disclosure is not limited to the above specific embodiments. The above specific embodiments are merely exemplary and not limitative. Those of ordinary skill in the art can also make various variations under the teaching of the present disclosure without departing from the spirit of the present disclosure and the scope of protection of the claims. Such variations shall all fall within the scope of protection of the present disclosure.

**Claims**

1. A point cloud coding method, comprising:

   determining a distribution characteristic value, wherein the distribution characteristic value is configured to denote distribution characteristic information of to-be-coded attribute information;
   determining, based on the distribution characteristic value, a target order corresponding to the to-be-coded attribute information, wherein the target order is an order of exponential-Golomb coding; and
   entropy-coding the to-be-coded attribute information based on an exponential-Golomb coding algorithm of the target order, and obtaining an attribute code stream.

2. The method according to claim 1, wherein the attribute code stream carries indication information configured to indicate the target order.

3. The method according to claim 2, wherein the attribute code stream carries an attribute information parameter set, the attribute information parameter set comprises the indication information and an attribute type corresponding to the indication information, and the attribute type is a type of the to-be-coded attribute information.

4. The method according to any one of claims 1-3, wherein the target order is positively correlated with the distribution characteristic value.

5. The method according to claim 1, wherein the determining, based on the distribution characteristic value, a target order corresponding to the to-be-coded attribute information comprises:
   determine, based on a rounded value of a ratio of the distribution characteristic value to an attribute quantization step, the target order corresponding to the to-be-coded attribute information.

6. The method according to claim 5, wherein the determining, based on a rounded value of a ratio of the distribution characteristic value to an attribute quantization step, the target order corresponding to the to-be-coded attribute information comprises:

   determine a target index value based on the rounded value of the ratio of the distribution characteristic value to the attribute quantization step; and
   determine, based on a stored corresponding relationship between an exponential-Golomb coding order and an index value, the target order corresponding to the to-be-coded attribute information, and the target order corresponds to the target index value.

7. The method according to claim 1, wherein the entropy-coding the to-be-coded attribute information based on an exponential-Golomb coding algorithm of the target order comprises:

   acquiring target information corresponding to the to-be-coded attribute information, wherein the target information comprises at least one of a predicted residual and a transformation coefficient; and
   entropy-coding the target information by using the exponential-Golomb coding algorithm of the target order.

8. The method according to any one of claims 1-3 or 5-7, wherein the distribution characteristic value is determined based on at least one of:

   a maximum of the to-be-coded attribute information;
   a minimum of the to-be-coded attribute information;
   a difference between the maximum and the minimum of the to-be-coded attribute information; and
   an average of absolute values of the to-be-coded attribute information.

9. A point cloud decoding method, comprising:

   determining a target order corresponding to a to-be-decoded attribute code stream, wherein the target order is an order of exponential-Golomb decoding; and
   entropy-decoding the to-be-decoded attribute code stream based on an exponential-Golomb decoding algorithm of the target order.

10. The method according to claim 9, wherein the to-be-decoded attribute code stream carries indication information configured to indicate the target order.

11. The method according to claim 10, wherein the to-be-decoded attribute code stream carries an attribute information parameter set, the attribute information parameter set comprises the indication information and an attribute type corresponding to the indication information, and the attribute type is a type of attribute information corresponding to the to-be-decoded attribute code stream.

12. A point cloud coding apparatus, comprising:

   a first determination module, which is configured to determine a distribution characteristic value, wherein the distribution characteristic value is configured to denote distribution characteristic information of to-be-coded attribute information;
   a second determination module, which is configured to determine, based on the distribution characteristic value, a target order corresponding to the to-be-coded attribute information, wherein the target order is an order of exponential-Golomb coding; and
   a coding module, which is configured to entropy-code the to-be-coded attribute information based on an exponential-Golomb coding algorithm of the target order, and obtain an attribute code stream.

13. The apparatus according to claim 12, wherein the attribute code stream carries indication information of the target order.

14. The apparatus according to claim 13, wherein the attribute code stream carries an attribute information parameter set, the attribute information parameter set comprises the indication information and an attribute type corresponding to the indication information, and the attribute type is a type of the to-be-coded attribute information.

15. The apparatus according to any one of claims 12-14, wherein the target order is positively correlated with the distribution characteristic value.

16. The apparatus according to claim 12, wherein the second determination module is specifically configured to:
    determine, based on a rounded value of a ratio of the distribution characteristic value to an attribute quantization step, the target order corresponding to the to-be-coded attribute information.

17. The apparatus according to claim 16, wherein the second determination module is specifically configured to:

   determine a target index value based on the rounded value of the ratio of the distribution characteristic value to the attribute quantization step; and
   determine, based on a stored corresponding relationship between an exponential-Golomb coding order and an index value, the target order corresponding to the to-be-coded attribute information. The target order corresponds to the target index value.

18. The apparatus according to claim 12, wherein the coding module is specifically configured to:

   acquire target information corresponding to the to-be-coded attribute information, wherein the target information comprises at least one of a predicted residual and a transformation coefficient; and
   entropy-code the target information by using the exponential-Golomb coding algorithm of the target order, and obtain an attribute code stream.

19. The apparatus according to any one of claims 12-14 or 16-18, wherein the distribution characteristic value is determined based on at least one of:

   a maximum of the to-be-coded attribute information;
   a minimum of the to-be-coded attribute information;
   a difference between the maximum and the minimum of the to-be-coded attribute information; and
   an average of absolute values of the to-be-coded attribute information.

20. A point cloud decoding apparatus, comprising:

   a determination module, which is configured to determine a target order corresponding to a to-be-decoded attribute code stream, wherein the target order is an order of exponential-Golomb decoding; and
   a decoding module, which is configured to entropy-decode the to-be-decoded attribute code stream based on an exponential-Golomb decoding algorithm of the target order.

21. The apparatus according to claim 20, wherein the to-be-decoded attribute code stream carries indication information configured to indicate the target order.

22. The apparatus according to claim 21, wherein the to-be-decoded attribute code stream carries an attribute information parameter set, the attribute information parameter set comprises the indication information and an attribute type corresponding to the indication information, and the attribute type is a type of attribute information corresponding to the to-be-decoded attribute code stream.

23. An electronic device, comprising a processor and a memory, wherein the memory stores a program or instruction capable of running on the processor, and the program or instruction implements steps of the point cloud coding method according to any one of claims 1-8 when executed by the processor; or the program or instruction implements steps of the point cloud decoding method according to any one of claims 9-11 when executed by the processor.

24. A readable storage medium, storing a program or instruction, wherein the program or instruction implements steps of the point cloud coding method according to any one of claims 1-8 when executed by a processor; or the program or instruction implements steps of the point cloud decoding method according to any one of claims 9-11 when executed by the processor.

25. A chip, comprising a processor and a communication interface, wherein the communication interface is coupled to the processor, and the processor is configured to run a program or instruction to implement steps of the point cloud coding method according to any one of claims 1-8, or implement steps of the point cloud decoding method according to any one of claims 9-11.

26. A computer program product, stored in a non-transitory readable storage medium, wherein the computer program product is executed by at least one processor to implement steps of the point cloud coding method according to any one of claims 1-8, or the computer program product is executed by at least one processor to implement steps of the point cloud decoding method according to any one of claims 9-11.

27. A communications device, configured to execute steps of the point cloud coding method according to any one of claims 1-8, or configured to execute steps of the point cloud decoding method according to any one of claims 9-11.

FIG. 1

Geometric code
stream

Attribute code
stream

Entropy decoding

Entropy decoding

Inverse
quantization

Octree
reconstruction

Attribute
prediction
compensation

Attribute
inverse
transformation

Inverse coordinate
quantization
Inverse coordinate
translation

Inverse space
transformation

Geometric
information

Attribute
information

FIG. 2

Start

Determine a distribution characteristic value — 101

Determine, based on the distribution characteristic value, a target order corresponding to to-be-coded attribute information — 102

Entropy-code the to-be-coded attribute information based on an exponential-Golomb coding algorithm of the target order, and obtain an attribute code stream — 103

End

FIG. 3

Start

Determine a target order corresponding to a to-be-decoded attribute code stream — 201

Entropy-decode the to-be-decoded attribute code stream based on an exponential-Golomb decoding algorithm of the target order — 202

End

FIG. 4

300

First determination module — 301

Second determination module — 302

Coding module — 303

Point cloud encoding apparatus

FIG. 5

400

Determination module — 401

Decoding module — 402

Point cloud decoding apparatus

FIG. 6

_500_

Electronic device

_501_

Processor

_502_

Memory

## FIG. 7

_600_

601 — Radio frequency unit

Network module — 602

610 —

609 — Memory

Application

Operating system

Audio output unit — 603

604

608 — Interface unit

Processor

Input unit

Graphics processing unit — 6041

Microphone — 6042

607 —

User input unit

6071 — Touch panel

6072 — Another input device

606

Display unit — 6061

Display panel

Sensor — 605

## FIG. 8

## INTERNATIONAL SEARCH REPORT

| International application No. |
| --- |
| **PCT/CN2022/135876** |

**A. CLASSIFICATION OF SUBJECT MATTER**

H04N 13/30(2018.01)i

According to International Patent Classification (IPC) or to both national classification and IPC

**B. FIELDS SEARCHED**

Minimum documentation searched (classification system followed by classification symbols)

H04N; G06T

Documentation searched other than minimum documentation to the extent that such documents are included in the fields searched

Electronic data base consulted during the international search (name of data base and, where practicable, search terms used)

CNTXT; CNABS; ENTXT; ENTXTC; CJFD; CNKI: 哥伦布, 点云, 属性, 阶数, 阶次, 分布, 三维, 反射, 像素, +Golomb+, point, cloud, attribute, order, distribut+, three-dimension, reflect+, pixel

**C. DOCUMENTS CONSIDERED TO BE RELEVANT**

| Category* | Citation of document, with indication, where appropriate, of the relevant passages | Relevant to claim No. |
| --- | --- | --- |
| X | CN 111247798 A (SZ DJI TECHNOLOGY CO., LTD.) 05 June 2020 (2020-06-05) description, paragraphs [0016]-[0036] and [0057]-[0245] | 9-11, 20-27 |
| X | CN 112565734 A (XIDIAN UNIVERSITY) 26 March 2021 (2021-03-26) description, paragraphs [0119]-[0124] | 9-11, 20-27 |
| X | US 2021319593 A1 (APPLE INC.) 14 October 2021 (2021-10-14) description, paragraphs [0126]-[0128] | 9-11, 20-27 |
| A | CN 103152567 A (INSTITUTE OF OPTICS AND ELECTRONICS, CHINESE ACADEMY OF SCIENCES) 12 June 2013 (2013-06-12) entire document | 1-27 |
| A | CN 101198055 A (HUAWEI TECHNOLOGIES CO., LTD.) 11 June 2008 (2008-06-11) entire document | 1-27 |
| A | CN 101355700 A (SCHOOL OF SOFTWARE AND MICROELECTRONICS, PEKING UNIVERSITY) 28 January 2009 (2009-01-28) entire document | 1-27 |
| A | WO 2021045130 A1 (PANASONIC INTELLECTUAL PROPERTY CORPORATION OF AMERICA) 11 March 2021 (2021-03-11) entire document | 1-27 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 January 2023** | **28 January 2023** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/135876**

**C.    DOCUMENTS CONSIDERED TO BE RELEVANT**

| Category* | Citation of document, with indication, where appropriate, of the relevant passages | Relevant to claim No. |
|---|---|---|
| A | US 2019311501 A1 (APPLE INC.) 10 October 2019 (2019-10-10) entire document | 1-27 |

Form PCT/ISA/210 (second sheet) (January 2015)

**INTERNATIONAL SEARCH REPORT**
**Information on patent family members**

International application No.

**PCT/CN2022/135876**

| Patent document cited in search report | | | Publication date (day/month/year) | Patent family member(s) | | | Publication date (day/month/year) |
|---|---|---|---|---|---|---|---|
| CN | 111247798 | A | 05 June 2020 | WO | 2020143005 | A1 | 16 July 2020 |
| | | | | US | 2021335016 | A1 | 28 October 2021 |
| | | | | CN | 111247798 | B | 15 March 2022 |
| CN | 112565734 | A | 26 March 2021 | CN | 112565734 | B | 19 April 2022 |
| US | 2021319593 | A1 | 14 October 2021 | US | 11450031 | B2 | 20 September 2022 |
| CN | 103152567 | A | 12 June 2013 | | None | | |
| CN | 101198055 | A | 11 June 2008 | CN | 100596198 | C | 24 March 2010 |
| CN | 101355700 | A | 28 January 2009 | CN | 101355700 | B | 02 June 2010 |
| WO | 2021045130 | A1 | 11 March 2021 | US | 2022191487 | A1 | 16 June 2022 |
| US | 2019311501 | A1 | 10 October 2019 | US | 2021183112 | A1 | 17 June 2021 |
| | | | | US | 10909727 | B2 | 02 February 2021 |
| | | | | US | 11508095 | B2 | 22 November 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111467925